Europäisches Patentamt

European Patent Office

Office européen des brevets

(11) Publication number: **0 217 605**
A2

# (12) EUROPEAN PATENT APPLICATION

(21) Application number: **86307225.2**

(22) Date of filing: **19.09.86**

(51) Int. Cl.⁴: **F 25 B 43/00**
**F 25 B 41/06**

(30) Priority: **20.09.85 JP 206270/85**

(43) Date of publication of application:
**08.04.87 Bulletin 87/15**

(84) Designated Contracting States:
**DE FR GB IT SE**

(71) Applicant: **SANDEN CORPORATION**
**20 Kotobuki-cho**
**Isesaki-shi Gunma-ken(JP)**

(72) Inventor: **Taguchi, Yukihiko**
**4-358-1 Hiyoshi-machi**
**Maebashi-shi Gunma 371(JP)**

(74) Representative: **Jackson, Peter Arthur et al,**
**GILL JENNINGS & EVERY 53-64 Chancery Lane**
**London WC2A 1HN(GB)**

(54) **Air conditioning system.**

(57) A control apparatus of an air conditioning system includes a sensor (24) which detects the level of the surface of liquid refrigerant in an accumulator (23) of a refrigeration circuit of the air conditioning system. In one example, the detected liquid level is compared with an upper and a lower limit value by a pair of comparators (27,28) and a logic circuit (35), and, if it is greater than the upper limit value or lower than the lower limit value, a micro-computer (36) instructs a pulse motor (M) to reduce or increase in size respectively the orifice of an expansion value (21) in the refrigeration circuit. For a predetermined period of time after start-up of the refrigeration circuit, the micro-computer (36) can be arranged to keep the orifice open a predetermined extent.

Fig.2.

Fig.4.

EP 0 217 605 A2

SANDEN CORPORATION.                    Ref: 50/2994/02

## AIR CONDITIONING SYSTEM

This invention relates to an automobile air conditioning system having a variable capacity compressor.

In recent years, variable capacity compressors have been used for the purpose of improving the performance and effectiveness of automobile air conditioning systems. If a variable capacity compressor is used in an automobile air conditioning system, an accumulator should also be included in the refrigerating system. This is because, if a thermostatic automatic expansion valve is used in the refrigerating system in which the variable capacity compressor is included and the air conditioning load is small, the capacity of the compressor will be cyclically increased and decreased, i.e. a hunting phenomenon occurs. Therefore, it becomes difficult to control the refrigeration cycle.

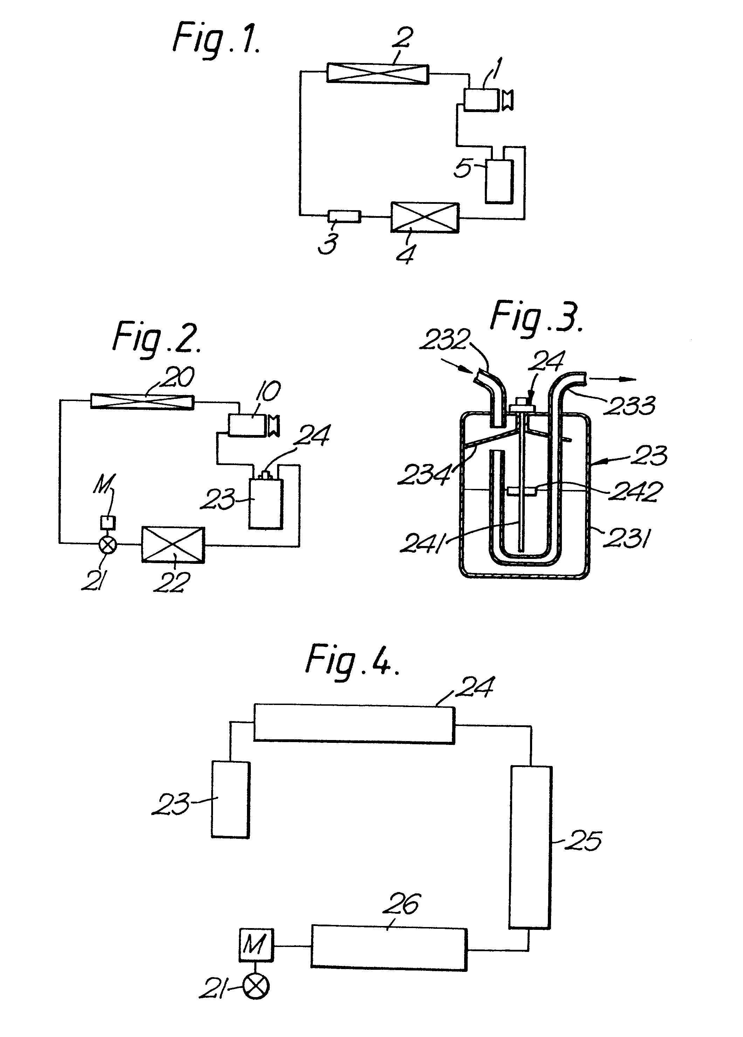

With reference to Figure 1, a refrigeration circuit for an automobile air conditioning system including a variable capacity compressor will be described. The automobile air conditioning system comprises a compressor 1 which is provided with a variable capacity mechanism, a condensor 2, an orifice tube 3, which serves as an expansion device, an evaporator 4 and an accumulator 5. These parts are serially connected with one another to form a closed refrigeration circuit. Compressed refrigerant discharged from the compressor 1 flows into the condensor 2 to allow the gaseous refrigerant to condense, and thereafter the refrigerant flows into the evaporator 4 through the orifice tube 3. Therefore, the compressed refrigerant is expanded while passing through the orifice tube 3. The expanded refrigerant is returned to the compressor 1 through the accumulator 5. In the above described refrigeration circuit the refrigerant in evaportator 4 is a mixture of gas and liquid, and the amount of refrigerant which must be enclosed in the refrigeration circuit is greater than that for a refrigeration circuit incorporating a thermostatic automatic expansion valve. Also, as the air conditioning load decreases, excess refrigerant is accumulated in the accumulator 5 and the volume of the accumulator 5 must therefore be larger as compared with the volume of a receiver tank of a refrigeration circuit incorporating a thermostatic automatic expansion valve. The accumulator 5 is needed to prevent liquid refrigerant from reaching the compressor 1. Thus, an automobile must be provided with sufficient space for the accumulator 5.

It is an object of this invention to provide a control apparatus for an air conditioning system which enables the size of the accumulator to be minmized and which results in stable operation of the refrigeration cycle.

According to the present invention, an air conditioning system comprises a variable capacity compressor, a condensor, an expansion valve with an orifice of variable size, an evaporator, an accumulator and a control apparatus for controlling the size of the orifice of the expansion valve, and is characterized in that the control apparatus comprises sensor means for detecting the level of the surface of liquid refrigerant in the accumulator, comparison means for comparing the detected level of the liquid surface with a predetermined value, and control means for increasing and decreasing the size of the orifice of the expansion valve in response to the result of the comparison by the comparison means.

Preferably the comparison means is arranged to compare the sensed level of the liquid surface with an upper limit value and a lower limit value, and the control means is arranged to increase and decrease the size of the orifice of the expansion value in response to the comparison means determining that the level of the liquid surface is below the lower limit value and above the upper limit value respectively.

The invention will now be described by way of example with reference to the accompanying drawings, in which:-

Figure 1 is a schematic diagram of a conventional refrigeration circuit of an air conditioning system;

Figure 2 is a schematic diagram of a refrigeration circuit of an air conditioning system incorporating a control apparatus in accordance with the present invention;

Figure 3 is a diagramatic longitudinal section of an accumulator incorporated in the refrigeration circuit of Figure 2;

Figure 4 is a block diagram of the control apparatus used with the refrigeration circuit of Figure 2;

Figure 5 is a flow chart illustrating the operation of the control apparatus of Figure 4; and,

Figure 6 is a circuit diagram of one example of circuitry suitable for the control apparatus of Figure 4.

With reference to Figure 2, an automobile air conditioning system comprises a variable capacity compressor 10, a condensor 20, an electronic expansion valve 21, an evaporator 22 and an accumulator 23. These parts are serially connected with one another to form a closed refrigeration circuit. Compressed refrigerant gas at a high temperature is discharged from the compressor 10 and flows into the condensor 20 to be condensed to liquid refrigerant, which then enters the electronic expansion valve 21. The liquid refrigerant is reduced in pressure and expanded by the electronic expansion valve 21. The size of the orifice in the electronic expansion valve 21 through which the refrigerant flows is gradually changed under the control of a micro-computer. The refrigerant which has passed through the expansion valve 21 is a mixture of vapour and liquid. This refrigerant then enters the evaporator 22, where it is able to exchange heat with the air, causing some or all of the remaining liquid to be vaporized. However, if some of the liquid refrigerant is not vaporized and flows out from the evaporator 22, this refrigerant is collected in the accumulator 23 so that only gaseous refrigerant flows out of the evaporator 22 and back to the compressor 10.

As shown in Figure 3, the accumulator 23 comprises a receptacle 231, a first conduit 232, which is connected to the evaporator 22, and a second conduit 233, which is connected to the compressor 10. A partition wall 234 is disposed between the ends of the first and second conduits 232,233. A sensor 24 for detecting the level of the liquid surface is disposed in the top end of the receptacle 231. A guide rod 241 extends axially along the centreline of the receptacle 231, and a float 242 is slidably disposed on the rod 241. Changes in the level of the liquid surface in the accumulator 23 are converted into changes in electrical resistance which the sensor 24 outputs as changes in voltage.

With reference to Figure 4, a control apparatus includes the sensor 24 for detecting the level of the liquid surface in the accumulator 23, a liquid level comparison device 25 for comparing predetermined limit values with the level of the liquid surface in the accumulator 23, and a control device 26 for controlling, via an pulse motor M, the orifice size of the elctronic expansion valve 21 in accordance with an output signal from the comparison device 25.

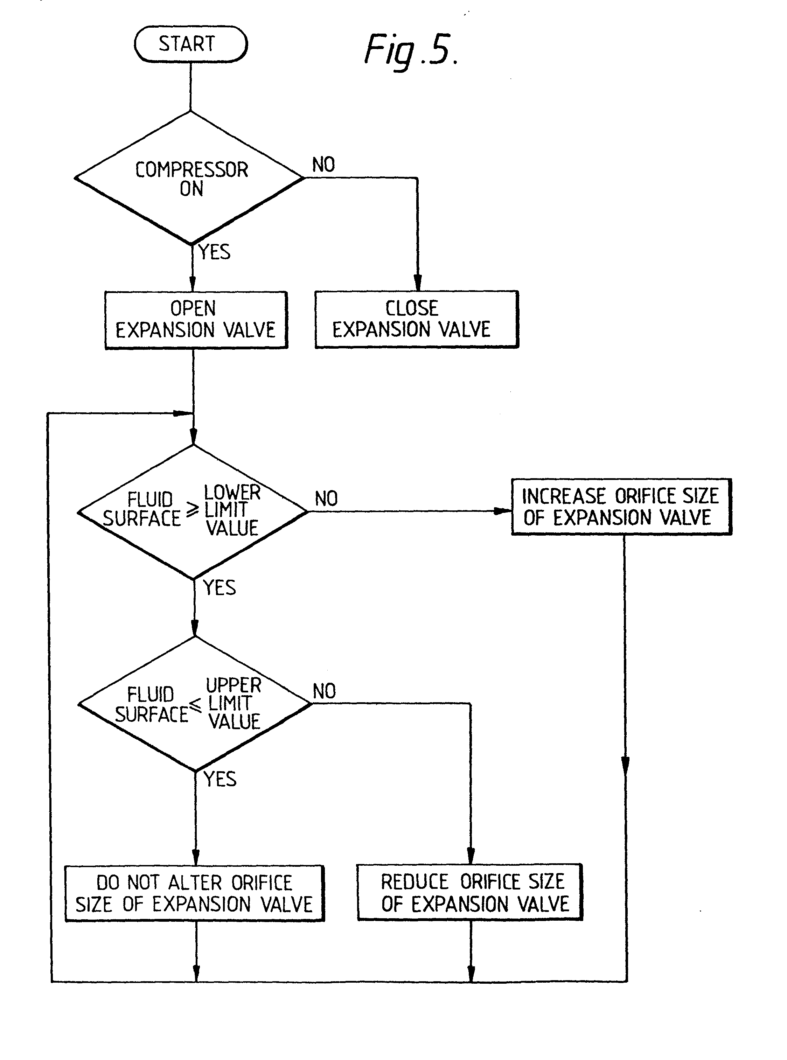

As shown in Figure 5, if the compressor 10 is not operating, the electronic expansion valve 21 is set to close the refrigeration circuit. When the compressor 10 is turned on, the electronic expansion valve 21 has its orifice opened to open the refrigeration circuit. The comparison device 25 contains preset limit values for the level of the liquid surface in the accumulator 23, and these values are used in controlling the opening and closing of the orifice of the expansion valve 21. Therefore, if the electronic expansion valve 21 is opened to a predetermined extent, the extent of opening is monitored by comparing the liquid level output from the sensor 24 with the preset limit values.

When the liquid level in the accumulator 23 is less than or equal to the upper limit value, but equal to or greater than the lower limit value, the liquid level comparison device 25 does not generate a signal for altering the setting of the expansion valve 21. Accordingly, the electronic expansion valve 21 remains opened to its predetermined extent. That is, the orifice size of the electronic expansion valve 21 is fixed, and the refrigeration circuit operates as if it is a conventional accumulator refrigeration circuit with a fixed throttle valve.

If the liquid level in the accumulator 23 exceeds the preset upper limit value, the comparison device 25 outputs a positive signal. When the control device 26 receives this positive signal, it reduces the orifice size of the electronic expansion valve 21. Otherwise, if the accumulator 23 is full of liquid refrigerant and the air conditioning load is reduced, liquid refrigerant might flow into the compressor 10. It is for this reason that it is necessary to throttle the orifice of the electronic expansion valve 21. The liquid level in the accumulator 23 drops once the orifice of the expansion valve 21 has been throttled. On the other hand, if the liquid level in the accumulator 23 drops below the preset lower limit value, the comparison device 25 outputs a negative signal. This results in the control device 26 increasing the orifice size of the electronic expansion valve 21. Otherwise, with only a small amount of the refrigerant arriving at the accumulator 23 as liquid, an increase in the air conditioning load could result in the outlet side of the evaporator 22 overheating. It is to prevent that from happening that the orifice of the electronic expansion valve 21 is opened to allow the liquid level in the accumulator to rise.

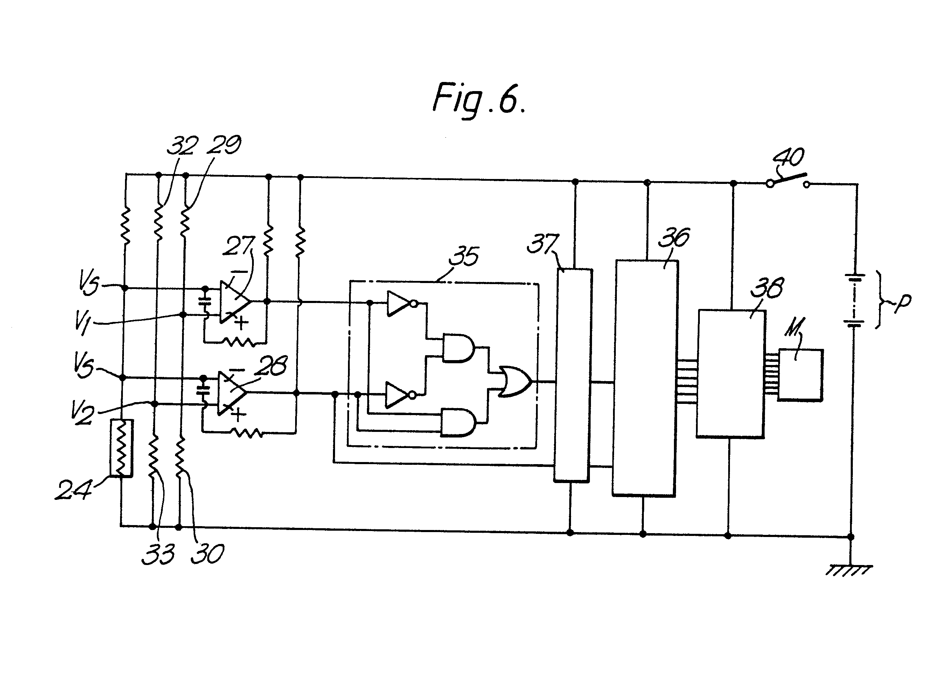

Referring to Figure 6, a control circuit suitable for use in the control apparatus of Figures 4 and 5 is shown.

The sensor 24 is connected to an electrical power source P via a switch 40. When the compressor 10 is turned on, a voltage $V_S$ representative of the position of the float 242 of sensor 24 is supplied to inverting input terminals of comparators 27, 28. A reference voltage $V_1$ representative of the upper limit value for the liquid level is produced by a voltage divider formed by resistors 29, 30 and is supplied to a non-inverting terminal of the comparator 27. A reference voltage $V_2$ representative of the lower limit value for the liquid level is produced by a voltage divider formed by resistors 32, 33 and is supplied to a non-inverting input terminal of the comparator 28. The outputs of the comparator 27 and the comparator 28 are determined by the results of the comparisons of the reference voltages $V_1$, $V_2$ with the voltage $V_S$. As reference voltage $V_1$

represents the upper limit value and reference voltage $V_2$ represents lower limit value, the reference voltage $V_1$ is always higher than the reference voltage $V_2$. The comparators 27 and 28 are arranged so that when the voltage $V_S$ is higher than the reference voltage $V_1$, the outputs of the two comparators 27, 28 are at high levels. When the voltage $V_S$ is lower than the reference voltage $V_1$ but higher than the reference voltage $V_2$, the output of the comparator 27 drops to a low level whilst the outout of the comparator 28 remains at the high level. The outputs of the comparators 27, 28 are fed into a logic circuit 35. The output of the logic circuit 35 and the output of the comparator 28 are fed into a micro-computer 36 through an A-D converter 37 as control signals for the orifice of the electronic expansion valve 21. When both output signals of the comparators 27, 28 are the same, i.e. when the voltage $V_S$ is higher than the reference voltage $V_1$ or the voltage $V_S$ is lower than the reference voltage $V_2$, the output of the logic circuit 35 is at a high level. Equally, when the output signals of the comparators are different to one another, i.e. when the voltage $V_S$ is higher than the reference voltage $V_2$ but lower than the reference voltage $V_1$, the output of the logic circuit 35 is at a low level. When the output of the logic circuit 35 is at the high level, the micro-computer 36 alters the orifice size of the electronic expansion valve 21 by means of a pulse motor M. The pulse motor M is driven by an output signal from a driving circuit 38 connected to the micro-computer 36. When the output of the logic circuit 35 is at the low level, the micro-computer 36 does not instruct altering of the orifice size of the expansion valve 21. In other words, the driving circuit does not generate a signal to drive the pulse motor M. When the voltage $V_S$ is higher than the reference voltage $V_1$ or lower than the reference voltage $V_2$, the orifice size of the expansion valve 21 is altered. However, since the orifice might need to be increased or reduced in size, the output of the comparator 28, which is an input into the micro-computer 36 through the A-D converter 37, is used to determine the direction of movement of the orifice. The micro-computer 36 includes a circuit for keeping the orifice of the expansion valve 21 opened to a predetermined extend for a predetermined period of time after the compressor 10 has been turned on.

## CLAIMS

1. An air conditioning system comprising a variable capacity compressor (10), a condensor (20), an expansion valve (21) with an orifice of variable size, an evaporator (22), an accumulator (23) and a control apparatus for controlling the size of the orifice of the expansion valve (21), characterized in that the control apparatus comprises sensor means (24) for detecting the level of the surface of liquid refrigerant in the accumulator (23), comparison means (27,28,35) for comparing the detected level of the liquid surface with a predetermined value, and control means (36,37,38,M) for increasing and decreasing the size of the orifice of the expansion valve (21) in response to the result of the comparison by the comparison means (27,28,35).

2. An air conditioning system according to claim 1, wherein the comparison means (27,28,35) is arranged to compare the detected level of the liquid surface with an upper limit value and a lower limit value, and the control means (36,37,38,M) is arranged to increase and decrease the size of the orifice of the expansion valve (21) in response to the comparison means (27,28,35) determining that the level of the liquid surface is below the lower limit value and above the upper limit value respectively.

3. An air conditioning system according to claim 1 or claim 2, wherein the control means (36,37,38,M) is arranged to keep the orifice opened at a predetermined extent for a predetermined period of time after the air conditioning system has been brought into operation.

4.    An air conditioning system according to any of the preceding claims, wherein the control means (36,37,38,M) includes a pulse motor (M) for effecting the increases and decreases in size of the orifice.

**Fig.1.**

**Fig.2.**

**Fig.3.**

**Fig.4.**

Fig.5.

2/3   0217605

0217605

Fig.6.